# EUROPEAN PATENT SPECIFICATION

(11) **EP 3 976 451 B1**
(45) Date of publication and mention of the grant of the patent: **29.11.2023**
(21) Application number: 20742791.5
(22) Date of filing: 28.05.2020
(51) Int. Cl.: B62H 1/14, A63C 5/00, B62M 27/02, B62J 43/00, B62J 43/10

(54) **SNOW SCOOTER**
SCHNEEMOBIL
TROTTINETTE À NEIGE

(30) Priority: 28.05.2019 FI 20190065 U
(43) Date of publication of application: 06.04.2022
(73) Proprietor: eLyly Oy, 43300 Kannonkoski (FI)
(72) Inventor: KAUPPINEN, Pasi, 43170 Häkkilä (FI)
(74) Representative: Kespat Oy
(86) International application number: PCT/FI2020/050359
(87) International publication number: WO 2020/240090

(56) References cited:
- WO-A1-2019/049109
- JP-A- S60 220 084
- JP-A- 2007 182 137
- US-A- 3 517 457
- US-A1- 2004 238 251

## Description

The object of the invention is a snow scooter, which includes
- a frame comprising a first and a second end, the frame forming a standing platform for a user,
- a steering column joined to the first end of the frame in an articulated manner for steering the snow scooter,
- a steering runner joined to the steering column in an articulated manner for supporting the snow scooter on a substrate surface,
- a track drive unit connected to the second end of the frame for supporting the snow scooter on the snow and for transmitting thrust to the substrate surface,
- an electric motor for driving the track drive unit, arranged inside the track drive unit, and
- a battery for storing electricity for the electric motor.

The present invention relates generally to sports equipment for use outdoors and in particular to a hand-steered snow scooter, wherein motion occurs by means of a free descent or an electrically assisted track drive unit.

Participation in winter sports is popular and a growing hobby for many people, as they wish to experience the vitality spawned by downhill skiing, cross-country skiing and other new forms of recreation. One of these new outdoor activities still enjoying significant popularity is the snow scooter, which is a combination of a snowboard and handlebars, as well as the so-called Hillstrike trike comprising three legs and handlebars. In particular snowboarding is generally performed on groomed downhill ski slopes, on which skiers and snowboarders compete in going downhill. An electrically driven snow scooter brings to these forms of recreation a greater freedom of choice with respect to both terrain and use of time.

WO2019/049109 discloses the preamble of claim 1.

Known from the prior art, the publication US 2004/0238251 A1 discloses a snow scooter which includes a frame, a steering column attached to a first end of the frame, wherein handlebars are provided at the top end of the steering column and a steering runner is joined to its bottom end in an articulated manner, and a track drive unit attached to a second end of the frame. The track drive unit of the snow scooter can be driven electrically. Drive units engineered to be driven electrically, however, are tall, which impairs the steerability of the snow scooter.

The object of the invention is to provide a snow scooter which is compacter, the driving height of which is lower and the handling of which is better than is the case with snow scooters of the prior art. The characteristic features of this invention are indicated in the attached patent claim 1.

This object can be achieved with a snow scooter which includes a frame comprising a first end and a second end, the frame forming a standing platform for a user, a steering column joined to the first end of the frame in an articulated manner for steering the snow scooter, and a steering runner joined to the steering column in an articulated manner for supporting the snow scooter on a substrate surface. In addition, the snow scooter includes a track drive unit connected to the second end of the frame for supporting the snow scooter on the snow and for transmitting thrust to the substrate surface, an electric motor for driving the track drive unit, arranged inside the track drive unit, and a battery for storing electricity for the electric motor. A battery space is formed in the frame for the battery, which battery space is formed together with the first end of the frame in front of the track drive unit in the direction of travel of the snow scooter so as to direct the weight of the battery onto the steering runner in order to improve steerability.

In accordance with the invention, the snow scooter is a combination of a snowboard and a scooter, to which a self-contained, electrically powered track drive unit has been added. The present invention comprises a battery and an electric motor for turning the track drive unit. The frame and thus the driving height of the snow scooter are as low as possible, as the battery is arranged very low in front of the track unit and the electric motor is arranged inside the track drive unit. The snow scooter in accordance with the invention is intended for winter recreation and general navigation in different terrains and ski slope areas where the good controllability of the snow scooter is particularly important. The object of the invention is to introduce a novel structure and overall apparatus the features of which give the enthusiast the possibility of choosing excursion places and times in accordance with his or her preferences.

The track drive unit advantageously includes a track frame for supporting the track drive unit in the frame of the snow scooter, the track frame comprising a front end and a rear end, a drive sprocket arranged in the front end or in the rear end of the track frame, an idler roll arranged at the opposite end of the track frame with respect to the drive sprocket, an endless track arranged in a loop around the track frame and supported by the drive sprocket and the idler roll, and support means arranged on the lower surface of the track frame for supporting the track between the drive sprocket and the idler roll.

In order to achieve the low structure of the track drive unit of the snow scooter, the support means advantageously include a plurality of sliding pads arranged on the inner surface of the loop in a row in the longitudinal direction of the track on both sides of the idler roll as well as sliding guide supports connected to the lower surface of the track frame, which sliding guide supports are adapted so as to slide on top of the sliding pads of the track, thus supporting the track between the drive sprocket and the idler roll. This way, the track can also be supported along the intermediate portion of the loop between the drive sprocket and the idler roll, thus improving the load-bearing capacity of the snow scooter and reducing the surface pressure on the snow caused by the snow scooter . Due to the small size of the track drive unit, there is very little room between the drive sprocket and the idler roll for support rollers or roller tracks generally known to be used in track units of the prior art, which raise the height of the structure of the track drive unit. A track support by means of a member rubbing directly against the track is very problematic because of the high friction coefficient of the track material and of the wear and tear on the track. By means of the solution outlined above, the track can be supported by means of a rubbing sliding guide support, as separate support surfaces are formed on the inner surface of the track and the sliding guide support is not in direct contact with the inner surface of the track.

Each sliding guide support can include at least one curved end for supporting the track turning around the idler roll or drive sprocket. It is thus possible to replace the individual guide rollers generally used for guiding the track in track drive units if the track is rotated along an intermediate portion between the drive sprocket and the idler roll.

The height of the frame from the substrate surface to the standing platform can be 200 - 400 mm, advantageously 270 - 330 mm. The steerability of the apparatus is thus preserved due to the very low centre of gravity.

The angle of coverage of both the drive sprocket and the idler roll in relation to the track is advantageously 170 - 180° in the track drive unit. The track drive unit is thus low and compact, which improves the controllability of the snow scooter.

The height of the track drive unit can be 20 - 40 %, advantageously 30 - 38 %, of the length of the track drive unit. The track drive unit is thus very low on the whole and the handling of the snow scooter is good due to its low centre of gravity.

The standing platform is advantageously continuous and even with a length of 95 - 100 % of the length of the frame. In other words, the snow scooter according to the invention advantageously does not include a seat, but rather is used from a standing position. The snow scooter is thus lighter and compacter and easier to control through the user's control of his or her body.

The snow scooter advantageously further includes a chain or belt for transmitting force from the electric motor to the drive sprocket. The electric motor is thus advantageously in relation to the drive sprocket a separate component, which can be easily removed for maintenance or replaced with a more powerful model, if necessary.

The battery space is advantageously formed in the frame underneath the standing platform in the position of use of the snow scooter. The centre of gravity of the snow scooter thus remains low.

According to an embodiment, the snow scooter additionally includes a controller for controlling the use of the electric motor, the controller, the battery and the electric motor being adapted to operate at a voltage of 24 - 72 V, advantageously 48 V. The current levels during use are thus lower, which reduces the heating and power consumption of the components.

The electric motor can be a brushless direct-current motor, the maximum output of which is 0.5 - 2.0 kW, advantageously 1.0 - 1.6 kW. Brushless direct-current motors are reliable and offer good usability together with a controller.

The controller and the electric motor are advantageously adapted to function as a generator for charging the battery in order to utilize the kinetic energy of the snow scooter when travelling downhill. This way, it is possible to improve the lifetime of the battery and, by this means, the range of operation.

The controller is advantageously the type that automatically regulates the use of the power of the electric motor in order to maintain a desired speed in the event of load changes. Thus, if the user holds the "throttle" at a constant position, the snow scooter advances at a substantially constant speed.

According to an embodiment, the controller is arranged in the battery space or in a housing structure belonging to the frame and the snow scooter further includes a heat-transfer element running through a wall of the battery space or housing structure, the heat-transfer element comprising a third end attached to the controller for transferring heat from the controller to the outside and a fourth end as well as a cooling element connected to the fourth end of the heat-transfer element outside of the battery space between the track drive unit and the frame, where the snow or water thrown up by the track drive unit cools the cooling element and further the controller by way of the heat-transfer element. Without cooling, the controller heats up considerably with heavy loads, which reduces the service life of the controller. By means of the solution outlined above, the operating temperature of the controller can be kept very low in a controlled manner so that the service life of the controller increases considerably.

The steering column advantageously comprises an upper end and a lower end, wherein a steering runner is joined to the lower end in an articulated manner and handlebars are connected to the upper end for steering the snow scooter. The handlebars are realized in a simple manner.

In other words, the object of the invention is an electrically driven snow scooter operated from a standing position, which advantageously has an adjustable steering column and handlebars which are joined to the frame in an articulated manner. By means of the adjustable steering column, the snow scooter is suitable for use by people of different sizes. Alternatively, the steering column can be exchanged for a steering column of a different size in accordance with the user' s height, while the height of the standing platform remains constant in all situations.

In addition, the snow scooter advantageously has a steering column with a telescopic shock absorber, which is connected to the track drive unit by means of the frame in the form of the standing platform. The telescopic shock absorber increases the snow scooter's driving comfort.

The structure in accordance with the invention advantageously has a stiff standing platform with a battery housing for a battery in the front. This way, it is possible to arrange the weight of the battery low in the frame as well as close to the steering runner, which improves the steerability of the snow scooter.

Both sides of the standing platform can rest on the track drive unit. The handlebars of the snow scooter can be adjustable upwards and downwards relative to the horizontal plane in order to select the right operational height.

The frame encompasses the battery with its connections as well as the track drive unit, the function of which is to propel the scooter.

The frame advantageously includes a kingpin element for joining the steering column to the frame in an articulated manner and in such a way that the steering runner can be turned 160 - 180°. This way, the steerability of the snow scooter is good.

The upper end of the handlebars can be attached in an axially rotatable manner to the frame in such a way as to allow the steering column to be folded in the direction of the frame. This way, the snow scooter can be stowed in a smaller space for transport.

The steering column can include a preloaded spring latch mechanism, which allows the handles to be folded down during storage. This also facilitates the transport of the snow scooter.

The brake can be a mechanical braking member, the control of which occurs manually with a brake lever on the handlebars.

According to an embodiment, the snow scooter can be formed from at least one frame, a kingpin in a first end of the frame, a steering runner, a steering column, a latch mechanism, handlebars and at least one three-point trestle at the other end of the frame . Attached to the three-point trestle of the frame is the self-contained track drive unit, and the snow scooter includes one or more batteries attached to the frame in front of the track drive unit above the centreline of the diameter of the drive sprocket.

The track drive unit advantageously constitutes a self-contained unit, the driving power of which comes from the one or more batteries of the electric motor.

The support means realizing the lower support of the track of the track drive unit advantageously has at least one support roller assembly, a roller belt or a combination of a sliding guide support and sliding pads.

Advantageously, at least one brake disc and one brake caliper are connected to the end of the drive sprocket. It is thus also possible to brake the snow scooter, if necessary, for instance when travelling downhill.

According to an embodiment, the three-point trestles can be attached to the frame by a horizontal shaft, so that the three-point trestles are rotatable about the shaft in the horizontal plane relative to the frame of the electrically driven snow scooter by an angle of 20 - 40°, advantageously 25 - 35°, in relation to the frame.

According to an embodiment, the snow scooter includes an auxiliary frame for attaching the track drive unit to the frame by means of an articulated joint, as well as transverse support means with sliding pins and sliding pin guides, wherein the sliding pins and the sliding pin guides receive transverse loads of the track frame, the sliding pins being attached to the auxiliary frame and the sliding pin guides being attached to the track frame or vice versa.

The steering runner is advantageously a ski provided with edges. By means of the edges, the sideways movement of the ski is reduced and the turnability of the snow scooter on icy surfaces improved.

The invention is illustrated in the following in detail with reference to the attached drawings illustrating embodiments of the invention, wherein
- Figure 1: shows a general schematic representation of the snow scooter in accordance with the invention in a side view,
- Figure 2: shows the standing platform and frame, to which the track drive unit and the battery are attached, of the snow scooter according to the invention as a schematic representation illustrated from the side,
- Figure 3: shows a schematic representation of the steering column and handlebars folded together onto the standing platform,
- Figure 4: shows a schematic representation of the electrically driven snow scooter in a top view,
- Figure 5: shows a view of the track frame on its own from above,
- Figure 6: shows a partial, exploded and oblique view of the track drive unit, auxiliary frame and frame,
- Figure 7: shows an oblique view of the track drive unit, auxiliary frame and frame together,
- Figure 8: shows an oblique view of the track on its own as well as of the sliding pads attached thereto,
- Figures 9a and 9b: show cross-sectional views of two alternative realizations of the support means,
- Figure 10: shows an oblique view of a realization of the cooling of the controller.

The following references are used in the figures:
- 1: drive sprocket
- 2: electric motor
- 3: idler roll
- 4: track
- 5: roller belt
- 6: support roller assembly
- 7: track frame
- 8: steering runner
- 9: handlebars
- 10: frame
- 11: battery
- 12: connecting cable
- 13: three-point trestle
- 13a: shaft
- 14: track drive unit
- 15: latch mechanism
- 16: kingpin element
- 17: brake caliper
- 18: chain
- 19: brake disc
- 20: sliding guide support
- 21: steering column
- 22: shock-absorbing element
- 23: first end of frame
- 24: second end of frame
- 25: standing platform
- 26: upper end of steering column
- 28: lower end of steering column
- 30: controller
- 32: battery space
- 34: heat-transfer element
- 36: third end
- 38: fourth end
- 40: cooling element
- 42: battery space opening
- 44: front end of track frame
- 46: rear end of track frame
- 48: support means
- 50: sliding pin guide
- 52: track drive unit vent
- 54: track ridge
- 56: electric motor housing
- 58: curved end of sliding guide support
- 60: attachment slot for idler roll
- 62: attachment opening for drive sprocket
- 64: chain tensioner
- 66: auxiliary frame
- 68: joint pin
- 70: sliding pins
- 72: frame housing structure
- 74: sliding pads
- 76: bolt
- 78: row of sliding pads
- 80: engagement hole
- 82: nut
- 82': alternative location of sliding pads
- 84: sliding pad opening
- 86: sliding surface
- 88: gap
- 90: spike
- 100: snow scooter
- 102: user
- 104: substrate surface.

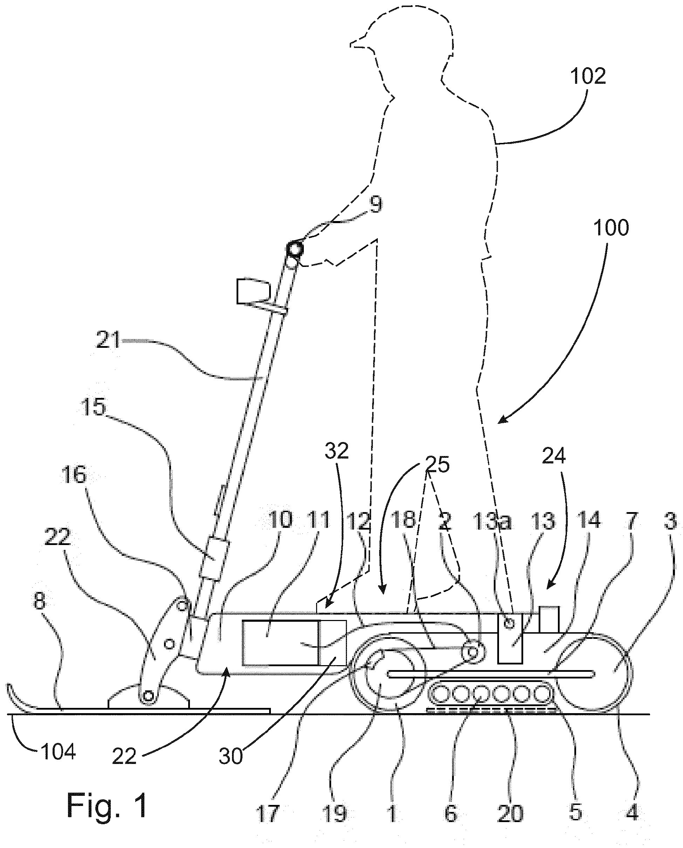

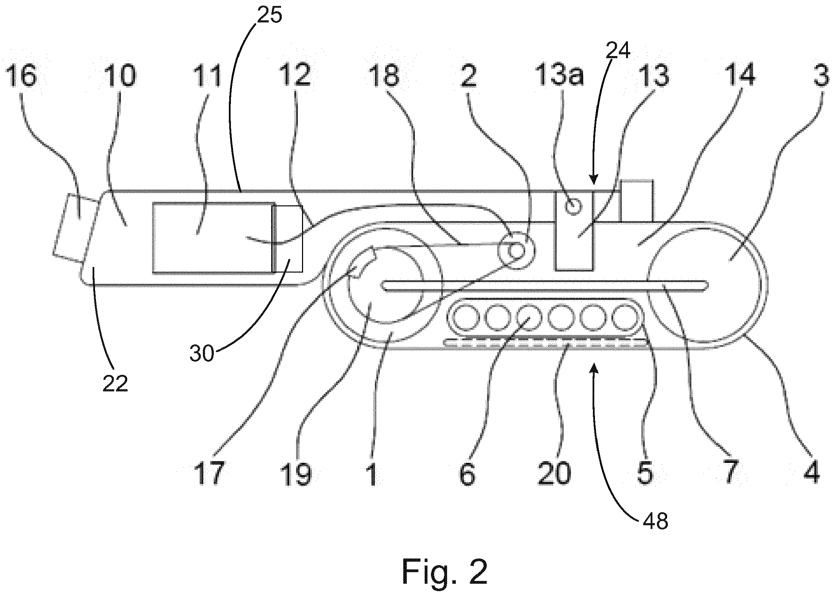

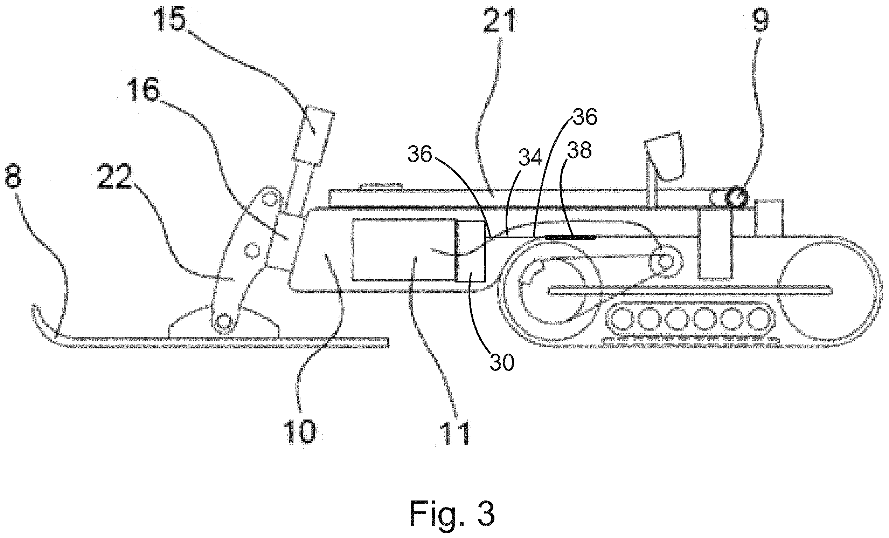

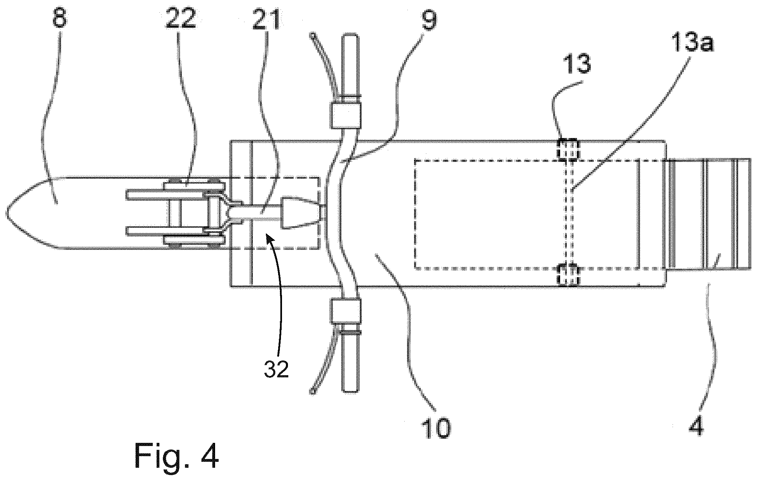

Figures 1 - 4 show schematic representations of a basic structure of the snow scooter 100 according to the invention.

In accordance with Figure 1, the electrically driven snow scooter according to the invention comprises a frame 10, handlebars 9, a steering column 21, a steering runner 8 and a track drive unit 14, which are assembled in such a manner as to form a snow scooter 100 in accordance with the invention. The handlebars 9, the steering column 21 and the steering runner 8 can be joined to one another by a shock-absorbing element 22, thus forming a steering unit, which is attached to the frame 10 by a kingpin element 16. The steering runner can also be called steering ski. The kingpin element 16 allows a free 180° steering movement. The steering column 21 can have a latch mechanism 15, which allows a folding of the steering column 21 into a storage position in the direction of the standing platform 25 formed on top of the frame 10. The track drive unit 14 and a battery 11 are attached to the frame 10, on which a standing platform 25 of the snow scooter 100 is formed.

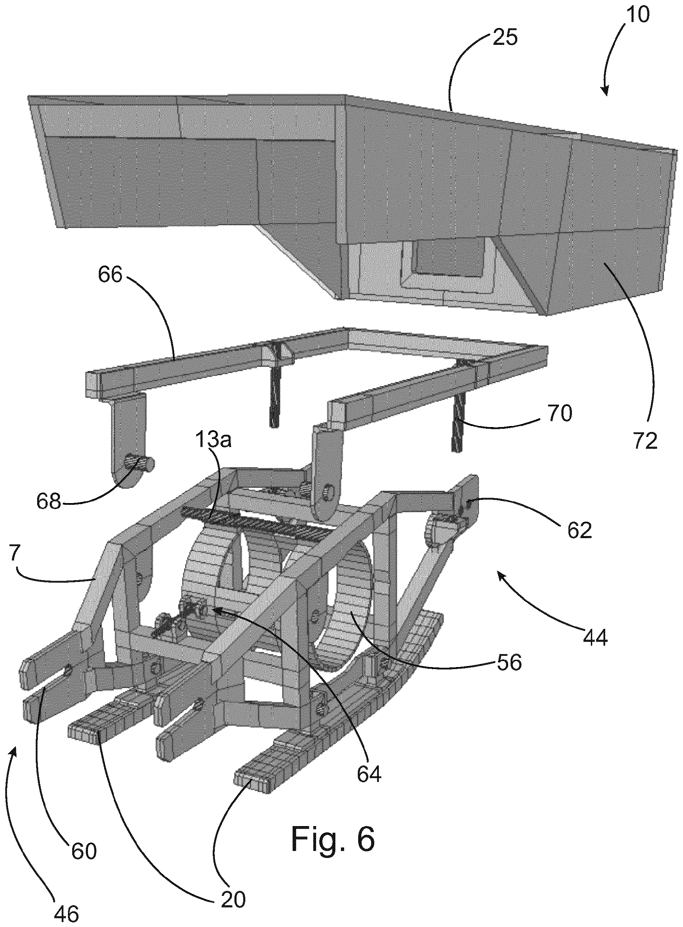

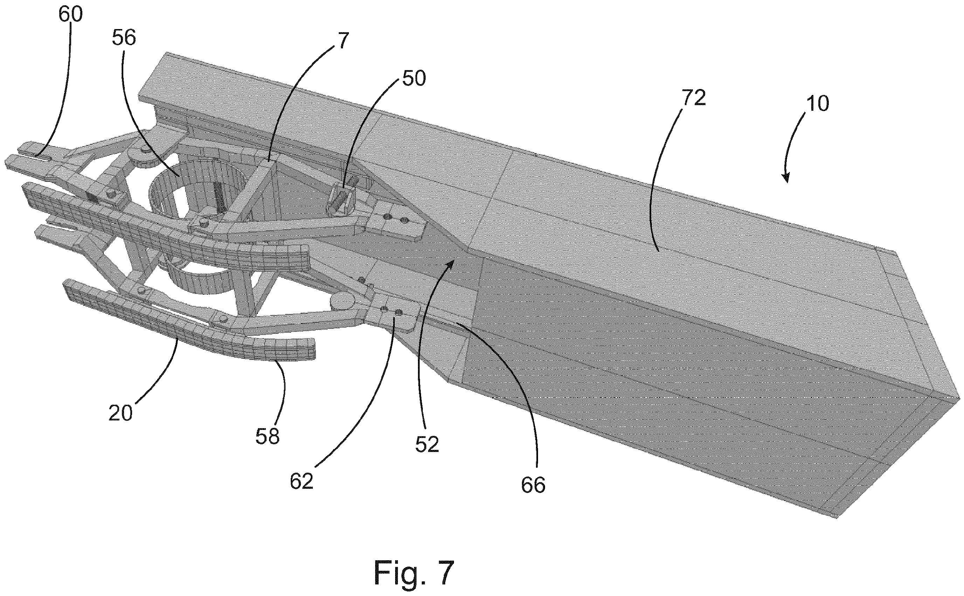

In accordance with Figures 1 - 3, 6 and 7, the track drive unit 14 is composed of a track frame 7, a track 4, a idler roll 3 and a drive sprocket 1, which receives its driving force from an electric motor 2 arranged inside the loop of the track 4 advantageously by means of a chain 18 acting as the transmission. The drive sprocket 1 and the idler roll 3 are connected together by a track frame 7 of the track drive unit 14. A simplified depiction of the track frame 7 is shown in Figures 1 - 4, while a realization according to an embodiment is shown in greater detail in Figures 6 and 7.

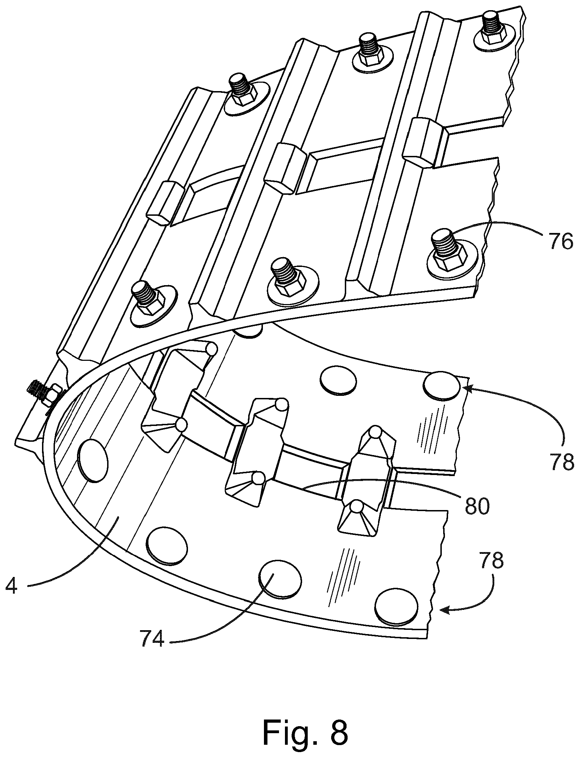

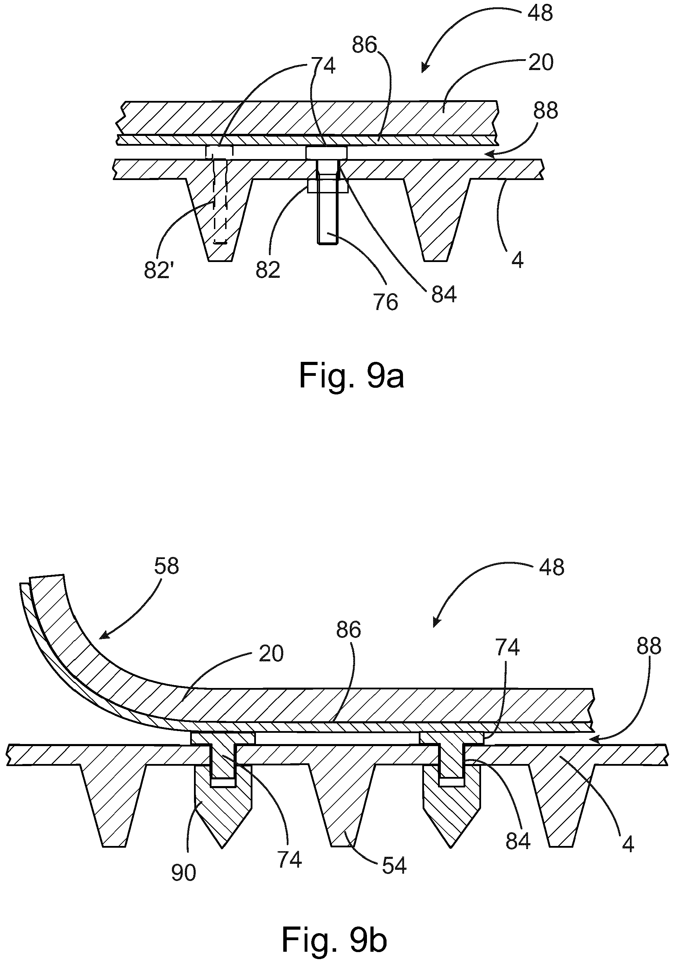

The lower guiding and support system of the track 4 can be formed by means of support means 48. The support means 48 can be realized by means of the shown support roller assembly 6, sliding guide supports 20 or a roller belt 5 or by combinations of the same schematically illustrated in Figures 1 - 3. However, the support means 48 are most advantageously realized by means of the sliding guide supports 20 visible in Figures 6, 7, 9a and 9b. Attached to the track frame 7 in this embodiment are sliding guide supports 20, which are attached to the lower surface of the track frame 7 between the drive sprocket and the idler roll on both sides of the drive sprocket and idler roll. The sliding guide supports 20 support the track frame 7 on sliding pads 74 formed in the surface of the track 4 shown in Figures 8 - 9b in such a manner that the sliding guide supports 20 do not come into contact with the material of the track 4, but rather remain at a distance from the inner surface of the track 4 by a gap 88 in accordance with Figures 9a and 9b. In accordance with Figure 8, the sliding pads 74 can be formed in two rows 78 of sliding pads on the inner surface of the track 4 on both sides of the drive sprocket and idler roll. The sliding pads can be realized, for example, by means of thin, flat-headed bolts, the heads of which form the sliding pads 74 on the inner surface of the track 4, while the tip of the bolt in turn forms a stud on the outside of the track 4, the stud increasing the traction of the track 4. The bolts 76 as well as the nuts 82 used for anchoring them are illustrated in Figures 9a and 9b. Attached to the end of the bolt 76 in Figure 9b is a separate spike 90, by means of which the traction of the track 4 can be increased. The sliding pads are most advantageously attached in alignment with the ridges 54 of the track 4 visible in Figure 9b and designated by the reference 82'.

The sliding pads 74 can be made, for example, of metal, in which case a plastic sliding surface 86, which is illustrated in Figures 9a and 9b, is attached to the sliding guide support 20. Alternatively, the sliding pads can be made of plastic, in which case the sliding guide supports in turn can be made of metal. Other material pairs can also be used with which one material is more durable than the other material which functions as a consumable surface. The attachment of the sliding pads to the track advantageously occurs by means of glue, screws or small hooks that can be folded through the track, or a combined effect of the foregoing. If the sliding pads or sliding guide supports are made of plastic, the component in question must be easy to replace.

The support means using sliding guide supports and sliding surfaces are compact in size and fit, i.e. can be arranged, inside the loop of the track of the track drive unit, where there is very little space. There is particularly limited space within the track loop because the physical dimensions of the track drive unit are very small and, moreover, because the transmission realized by means of the electric motor and chain or belt is also realized by means of the drive sprocket and electric motor within the track loop.

The battery 11 housed in the frame 10 can provide power along a connecting cable 12 to the electric motor 2 arranged inside the loop of the track 4. In accordance with an embodiment, the thus formed self-contained track drive unit 14 can be attached to two three-point trestles 13 as shown in Figures 1, 2 and 4. The three-point trestles can be mounted by bearings on the frame 10 on both sides of a shaft 13a running through the frame 10.

Alternatively, the track drive unit 14 can be attached to the frame 10 by means of the auxiliary frame 66 visible in Figures 6 and 7. In Figures 6 and 7, the frame 10 is a housing structure 72 realized from wood, inside which a battery and a controller are arranged. The upper surface of the housing structure 72 is formed by the standing platform 25, visible in Figure 1, for the user 102 of the snow scooter 100, who stands on the standing platform 25. The battery space can be a separate housing formed inside the housing structure and arranged in front of the track drive unit. The battery space can also be a cradle, on which the battery is supported in front of the track drive unit, suspended underneath the standing platform.

The speed of the electrically driven snow scooter can be reduced or the snow scooter can be stopped with a brake unit that can be installed in the drive sprocket 1 as shown in Figures 1 - 3, said brake unit being formed by a brake disc 19 and brake caliper 17.

In accordance with Figures 6 and 7, the rear end 46 of the track frame 7 includes an attachment slot 60 for the idler roll and the front end 44 includes an attachment opening or attachment openings 62 for the drive sprocket. By means of the attachment slot for the idler roll, the idler roll can be moved in relation to the drive sprocket so as to tighten or loosen the track loop. A rough adjustment can be carried out by choosing a suitable attachment opening for the drive sprocket and performing a final tightening by changing the position of the idler roll in the attachment slot 60.

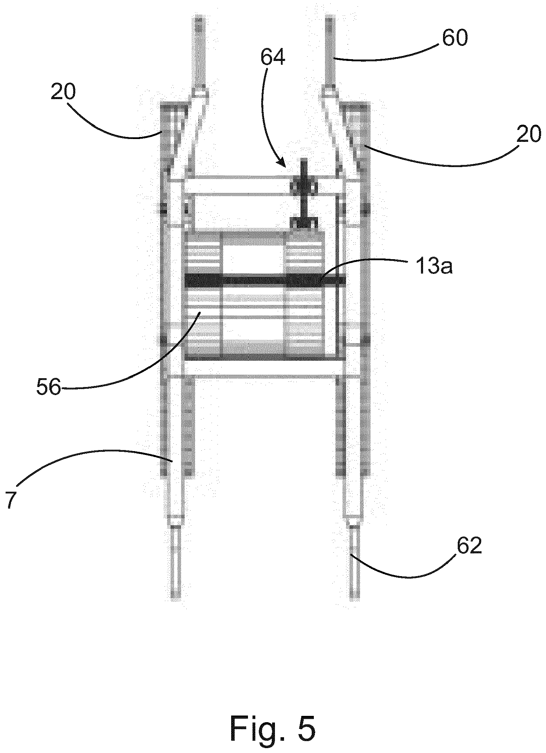

The transmission from the electric motor 2 to the drive sprocket 1 can be advantageously realized using a chain 18 or belt. The electric motor uses a notably small gearwheel with the power take-off shaft relative to the gearwheel of the drive sprocket, so that the electric motor at a high operating speed supplies sufficient torque for the needs of the snow scooter. For the tightening of the chain, the track drive unit can include the chain tensioner 64 shown in Figures 5 and 6, by means of which the housing 56 of the electric motor can be moved in relation to the drive sprocket in order to tighten or loosen the chain.

In accordance with Figure 6, the track frame 7 can be attached to the frame 10 using an auxiliary frame 66. The auxiliary frame 66 can be attached, for example, by means of bolts to the wooden housing structure 72 acting as the frame 10. Joint pins 68, which can fit into a tube acting as the shaft 13a, thus forming a joint between the track drive unit 14 and the frame 10, are formed in the auxiliary frame 66. For receiving the transverse forces of the track drive unit acting on the shaft 13a, the auxiliary frame 66 can include sliding pins 70, which are in contact with the sliding pin guides 50 belonging to the track frame 7 and support the track frame 7 swinging around the shaft 13a in a lateral direction relative to the auxiliary frame 66.

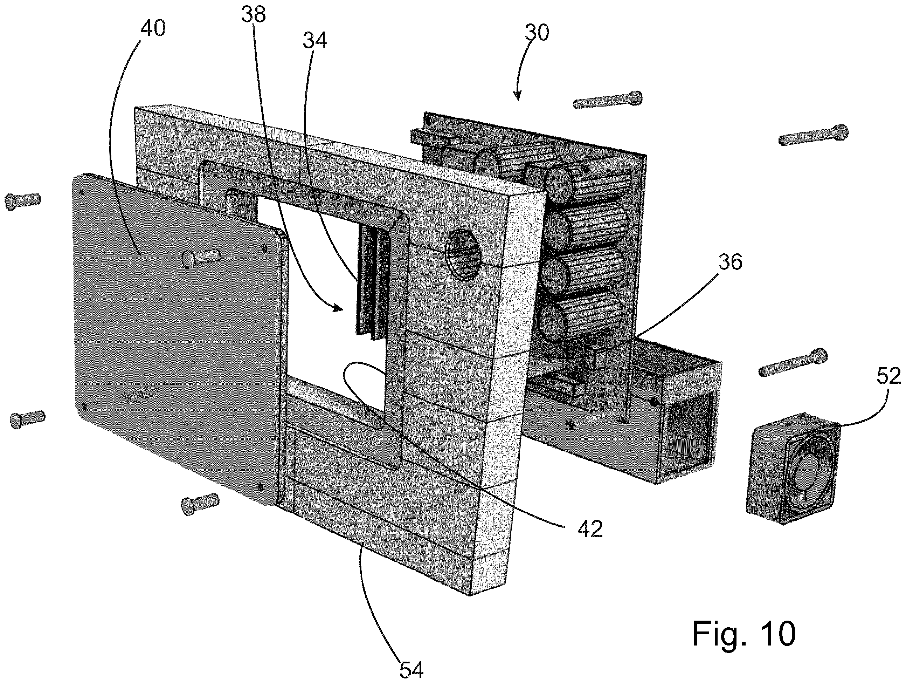

In Figure 10, a partial, exploded view of the structure of the controller 30 controlling the operation of the electric motor is shown. The controller 30 is advantageously arranged together with the battery 11 in the battery space 32 shown in Figures 1 - 3, which can also be a partially open space in the front part of the frame 10, in which the battery and the controller are arranged. The controller can also be arranged elsewhere in the housing structure 72. The battery space 32 is, however, advantageously closable in a water-tight manner, thus avoiding that water enters into contact with the battery 11 and the controller 30 advantageously arranged in connection with the battery. The controller can also be arranged in a separate space relative to the battery. As the current travelling from the battery to the electric motor flows via the controller, the controller can heat up when there is a heavy load, for example, when driving uphill. In order to avoid a reduction of the service life of the controller due to overheating, a cooling is advantageously set up for the controller.

In this case, the cooling is formed by making an opening 42 in the battery space or housing structure, through which a heat-transfer element 34 is arranged. In this connection, the heat-transfer element is a cooling heat sink attached by a third end 36 to the controller 30, a cooling element 40 being in turn attached to a fourth end 38 of the same. The cooling element can be, for example, a track drive unit vent 52 in a surface of the frame 10 closest to the track drive unit, i.e. in the frame 10 in accordance with Figure 6, where snow, water or slush thrown up by the track of the track drive unit comes into contact with the cooling element. This way, the heat to be transferred from the controller via the heat-transfer element to the cooling element is transferred for the heating of the snow or water on its surface, thus cooling the controller. The controller can be controlled by means of a potentiometer arranged on the handlebars or a thumb throttle known, for example, from ATVs.

In part, existing components can be used when realizing the snow scooter according to the invention. The drive sprocket of the track drive unit in the snow scooter can be, for example, the No-slip drive sprocket offered for sale on the Finnish website Wanda-motor.fi, which has a partition of 2.52, 11/54 teeth and an outer diameter of 200 mm. The track in turn can be made of rubber in which there are metal buckles for the protection of the engagement holes as well as a fibre reinforcement for the reinforcement of the rubber track. The track can have a length of 1200 - 2000 mm and a width of 100 - 350 mm. The electric motor used can be, for example, a 36 V or 48 V direct-current electric motor, the maximum output of which is 0.5 - 2.0 kW, advantageously 1.0 - 1.6 kW. The motor speed of the electric motor can be 2500 - 5000 rpm, which is modified by means of a transmission so as to be suited to the use of a snow scooter, in such a manner that the maximum speed is 25 km/h. The battery is a 10 - 40 Ah battery naturally with a voltage corresponding to the electric motor.

The width of the snow scooter can be 100 - 350 mm, advantageously 150 - 200 mm; the height from the standing platform to the surface of the snow acting as the substrate 200 - 400 mm, advantageously 270 - 330 mm; the overall height up to the handlebars 1000 - 1500 mm, advantageously 1100 - 1300 mm; and the overall length in a position of use from the tip of the steering runner to the rear edge of the track drive unit 1500 - 2000 mm, advantageously 1600 - 1800 mm, and in the transport position with a folded steering column 1000 - 1500 mm, advantageously 1100 - 1300 mm. The standing platform can have a length of 700 - 1300 mm, advantageously 900 - 1100 mm. The length of the track drive unit in terms of the perimeter of the endless track can be 500 - 900 mm, advantageously 600 - 750 mm. The track drive unit protrudes beyond the frame by 0 - 400 mm, advantageously 100 - 300 mm. The housing structure of the frame of the snow scooter is advantageously wooden and made of a composite and the frame of the track drive unit and the auxiliary frame can be made of, for example, aluminium. The overall weight of the snow scooter is thus in a range of 15 - 40 kg.

It should be noted in this connection that the support of the track of the track drive unit illustrated in connection with the snow scooter according to the present invention, wherein the support means include a plurality of sliding surfaces arranged on the inner surface of a track loop in the longitudinal direction of the track in a row on both sides of the idler roll as well as sliding guide supports connected to the lower surface of the track frame, the sliding guide supports being adapted so as to slide on top of the sliding surfaces of the track between the drive sprocket and the idler roll, can also be implemented independently as an independent invention for other objects not related to the snow scooter according to the present invention.

It should be noted in this connection that the cooling of the controller illustrated in connection with the snow scooter according to the present invention, wherein the controller is arranged in a battery space and the snow scooter further includes a heat-transfer element running through the battery space, the heat-transfer element comprising a third end attached to the controller for transferring heat from the controller to the exterior of the battery space as well as a fourth end and a cooling element connected to the fourth end of the heat-transfer element to the outside of the battery space between the track drive unit and the frame, where the snow and water thrown up by the track drive unit cools the cooling element as well as the controller by way of the heat-transfer element.

## Claims

1. A snow scooter (100), which includes
- a frame (10) comprising a first end (23) and a second end (24), the frame (10) forming a support for a user (102),
- a steering column (21) joined to the first end (23) of the frame (10) in an articulated manner for steering the snow scooter (100),
- a steering runner (8) joined to the lower end (28) of the steering column (21) for supporting the snow scooter (100) on the surface of a substrate (104),
- a track drive unit (14) connected to the second end (24) of the frame (10) for supporting the snow scooter (100) on the snow (104) and for transmitting thrust to the surface of the substrate (104), wherein the track drive unit (14) is composed of a track frame (7), a track (4) formed as a loop, an idler roll (3) and a drive sprocket (1),
- an electric motor (2) for driving the track drive unit (14), wherein the drive sprocket (1) receives its driving force from the electric motor (2), and
- a battery (11) for storing electricity for the electric motor (2),
wherein the frame (10) includes a battery space (32) formed in the frame (10) for the battery (11), which battery space (32) is formed in connection with the first end (23) of the frame (10) in front of the track drive unit (14) in the direction of travel of the snow scooter (100) so as to direct the weight of the battery (11) onto the steering runner (8) in order to improve steerability, **characterized in that**
- the snow scooter (100) has only one said steering runner (8),
- the support is a standing platform (25),
- the electric motor (2) is arranged inside the loop of the track (4), and
- the snow scooter (100) is adapted to be used from a standing position.

2. The snow scooter according to claim 1, **characterized in that** the track drive unit (14) includes
- the track frame (7) for supporting the track drive unit (14) on the frame (10) of the snow scooter (100), the track frame (7) comprising a front end (44) and a rear end (46),
- the drive sprocket (1) arranged in the front end (44) or rear end (46) of the track frame (7),
- the idler roll (3) arranged at an opposite end of the track frame (7) relative to the drive sprocket (1),
- the track (4) arranged in the loop around the track frame (7) and supported by the drive sprocket (1) and the idler roll (3), and
- support means (48) arranged on a lower surface of the track frame (7) for supporting the track (4) between the drive sprocket (1) and the idler roll (3).

3. The snow scooter according to claim 2, **characterized in that**, in the track drive unit (14), an angle of coverage of both the drive sprocket (1) and the idler roll (3) in relation to the track (4) is 170 - 180°.

4. The snow scooter according to any one of claims 1 - 3, **characterized in that** height of the track drive unit (14) is 20 - 40 %, advantageously 30 - 38 %, of the length of the track drive unit (14).

5. The snow scooter according to any one of claims 1 - 4, **characterized in that** the standing platform (25) is continuous and even with a length of 95 - 100 % of the length of the frame (10) .

6. The snow scooter according to any one of claims 2 - 5, **characterized in that** the snow scooter (100) further includes a chain (18) or belt for transmitting power from the electric motor (2) to the drive sprocket (1).

7. The snow scooter according to any one of claims 2 - 6, **characterized in that** the track frame (7) is joined to the frame (10) in an articulated manner by means of a transverse shaft (13a) in order to improve suitability of the track drive unit (14) to terrain.

8. The snow scooter according to any one of claims 1 - 7, **characterized in that** the steering column (21) comprises an upper end (26) and a lower end (28), wherein the steering runner (8) is joined to the lower end (28) in an articulated manner and handlebars (9) are connected to the upper end (26) for steering the snow scooter (100).

9. The snow scooter according to any one of claims 1 - 8, **characterized in that** the battery space (32) is formed in the frame (10) in position of use of the snow scooter (100) underneath the standing platform (25).

10. The snow scooter according to any one of claims 1 - 9, **characterized in that** height of the frame (10) from the substrate surface (104) to the standing platform (25) is 200 - 400 mm, advantageously 270 - 330 mm.

11. The snow scooter according to any one of claims 2 - 10, **characterized in that** the support means (48) include
- a plurality of sliding pads (74) arranged on an inner surface of the loop of the track (4) in a row in longitudinal direction of the track (4) on both sides of the idler roll (3), and
- sliding guide supports (20) connected to the lower surface of the track frame (7), which sliding guide supports (20) are adapted to slide on top of the sliding pads (74) of the track (4), thus supporting the track (4) between the drive sprocket (1) and the idler roll (3).

12. The snow scooter according to any one of claims 1 - 11, **characterized in that** the snow scooter (100) additionally includes a controller (30) for controlling use of the electric motor (2), and **in that** the controller (30), the battery (11) and the electric motor (2) are adapted to operate at a voltage of 24 - 72 V, advantageously 48 V.

13. The snow scooter according to any one of claims 1 - 12, **characterized in that** the electric motor (2) is a brushless direct-current motor, maximum output of which is 0.5 - 2.0 kW, advantageously 1.0 - 1.6 kW.

14. The snow scooter according to claim 12 or 13, **characterized in that** the controller (30) and the electric motor (2) are adapted to function as a generator in order to charge the battery (11) and utilize kinetic energy of the snow scooter (100) when travelling downhill.

15. The snow scooter according to any one of claims 12 - 14, **characterized in that** the controller (30) is arranged in the battery space (32) or in some other housing structure (72) belonging to the frame (10) and the snow scooter (100) further includes
- a heat-transfer element (34) running through a wall of the battery space (32) or housing structure (72), the heat-transfer element (34) comprising a third end (36) attached to the controller (30) for transferring heat from the controller (30) to the exterior of the battery space (32) and a fourth end (38), as well as
- a cooling element (40) connected to the fourth end (38) of the heat-transfer element (34) in an outer surface of the housing structure (72), advantageously in a surface delimiting a vent (52) formed in the housing structure (72) for the track drive unit (14) .

## Patentansprüche

1. Schneemobil (100), das Folgendes einschließt
- einen Rahmen (10), der ein erstes Ende (23) und ein zweites Ende (24) umfasst, wobei der Rahmen (10) eine Stütze für einen Benutzer (102) bildet,
- eine Lenksäule (21), die mit dem ersten Ende (23) des Rahmens (10) gelenkig verbunden ist, um das Schneemobil (100) zu lenken,
- einen Lenkungsläufer (8), der mit dem unteren Ende (28) der Lenksäule (21) verbunden ist, um das Schneemobil (100) auf der Oberfläche eines Substrats (104) zu unterstützen,
- eine mit dem zweiten Ende (24) des Rahmens (10) verbundene Raupenantriebseinheit (14) zumUnterstützen desSchneemobils (100) auf dem Schnee (104) und zum Übertragen von Schub auf die Oberfläche des Substrats (104), wobei die Raupenantriebseinheit (14) aus einem Raupenrahmen (7), einer als Schleife ausgebildeten Raupe (4), einer Umlenkrolle (3) und einem Antriebsritzel (1) zusammengesetzt ist,
- einen Elektromotor (2) zum Antrieb der Raupenantriebseinheit (14), wobei das Antriebsritzel (1) seine Antriebskraft von dem Elektromotor (2) empfängt, und
- eine Batterie (11) zum Speichern von Elektrizität für den Elektromotor (2),
wobei der Rahmen (10) einen im Rahmen (10) ausgebildeten Batterieraum (32) für die Batterie (11) einschließt, der in Verbindung mit dem ersten Ende (23) des Rahmens (10) in Fahrtrichtung des Schneemobils (100) vor der Raupenantriebseinheit (14) ausgebildet ist, um das Gewicht der Batterie (11) auf den Lenkungsläufer (8) zu richten, um die Lenkbarkeit zu verbessern, **dadurch gekennzeichnet, dass**
- das Schneemobil (100) nur einen Lenkungsläufer (8) aufweist,
- die Stütze eine Standplattform (25) ist,
- der Elektromotor (2) innerhalb der Schleife der Raupe (4) angeordnet ist, und
- das Schneemobil (100) so eingerichtet ist, dass es aus einer Standposition verwendet werden kann.

2. Schneemobil nach Anspruch 1, **dadurch gekennzeichnet, dass** die Raupenantriebseinheit (14) Folgendes einschließt
- den Raupenrahmen (7) zur Unterstützung der Raupenantriebseinheit (14) am Rahmen (10) des Schneemobils (100), wobei der Raupenrahmen (7) ein vorderes Ende (44) und ein hinteres Ende (46) umfasst,
- das im vorderen Ende (44) oder hinteren Ende (46) des Rahmens der Raupe (7) angeordnete Antriebsritzel (1),
- die Laufrolle (3), die an einem gegenüberliegenden Ende des Rahmens der Raupe (7) in Bezug auf das Antriebsritzel (1) angeordnet ist,
- die Raupe (4), die in einer Schleife um den Raupenrahmen (7) angeordnet ist und von dem Antriebsritzel (1) und der Umlenkrolle (3) unterstützt wird, und
- Stützmittel (48), die an einer unteren Oberfläche des Raupenrahmens (7) angeordnet sind, um die Raupe (4) zwischen dem Antriebsritzel (1) und der Laufrolle (3) zu unterstützen.

3. Schneemobil nach Anspruch 2, **dadurch gekennzeichnet, dass** in der Raupenantriebseinheit (14) ein Überdeckungswinkel sowohl des Antriebsritzels (1) als auch der Laufrolle (3) in Bezug auf die Raupe (4) 170-180° beträgt.

4. Schneemobil nach einem der Ansprüche 1 bis 3, **dadurch gekennzeichnet, dass** die Höhe der Raupenantriebseinheit (14) 20-40 %, vorteilhafterweise 30-38 %, der Länge der Raupenantriebseinheit (14) beträgt.

5. Schneemobil nach einem der Ansprüche 1 bis 4, **dadurch gekennzeichnet, dass** die Standplattform (25) durchgehend und eben mit einer Länge von 95-100 % der Länge des Rahmens (10) ist.

6. Schneemobil nach einem der Ansprüche 2 bis 5, **dadurch gekennzeichnet, dass** das Schneemobil (100) ferner eine Kette (18) oder einen Gurt zur Übertragung von Energie vom Elektromotor (2) auf das Antriebsritzel (1) einschließt.

7. Schneemobil nach einem der Ansprüche 2 bis 6, **dadurch gekennzeichnet, dass** der Raupenrahmen (7) mit dem Rahmen (10) mittels einer Querwelle (13a) gelenkig verbunden ist, um die Tauglichkeit der Raupenantriebseinheit (14) für das Gelände zu verbessern.

8. Schneemobil nach einem der Ansprüche 1 bis 7, **dadurch gekennzeichnet, dass** die Lenksäule (21) ein oberes Ende (26) und ein unteres Ende (28) umfasst, wobei der Lenkungsläufer (8) mit dem unteren Ende (28) gelenkig verbunden ist und die Lenkstange (9) zum Lenken des Schneemobils (100) mit dem oberen Ende (26) verbunden ist.

9. Schneemobil nach einem der Ansprüche 1 bis 8, **dadurch gekennzeichnet, dass** der Batterieraum (32) in der Verwendungsposition des Schneemobils (100) unterhalb der Standplattform (25) im Rahmen (10) ausgebildet ist.

10. Schneemobil nach einem der Ansprüche 1 bis 9, **dadurch gekennzeichnet, dass** die Höhe des Rahmens (10) von der Oberfläche des Substrats (104) bis zur Standplattform (25) 200-400 mm, vorteilhafterweise 270-330 mm, beträgt.

11. Schneemobil nach einem der Ansprüche 2 bis 10, **dadurch gekennzeichnet, dass** die Stützmittel (48) Folgendes einschließen
- eine Vielzahl von Gleitpolstern (74), die auf einer inneren Oberfläche der Schleife der Raupe (4) in einer Reihe in Längsrichtung der Raupe (4) auf beiden Seiten der Laufrolle (3) angeordnet sind, und
- Gleitführungsstützen (20), die mit der unteren Oberfläche des Rahmens der Raupe (7) verbunden sind, wobei die Gleitführungsstützen (20) eingerichtet sind, um auf den Gleitpolstern (74) der Raupe (4) zu gleiten und so die Raupe (4) zwischen dem Antriebsritzel (1) und der Laufrolle (3) zu unterstützen.

12. Schneemobil nach einem der Ansprüche 1 bis 11, **dadurch gekennzeichnet, dass** das Schneemobil (100) zusätzlich eine Steuerung (30) zur Steuerung des Betriebs des Elektromotors (2) einschließt, und dass die Steuerung (30), die Batterie (11) und der Elektromotor (2) so eingerichtet sind, dass sie mit einer Spannung von 24-72 V, vorteilhafterweise 48 V, betrieben werden.

13. Schneemobil nach einem der Ansprüche 1 bis 12, **dadurch gekennzeichnet, dass** der Elektromotor (2) ein bürstenloser Gleichstrommotor ist, dessen maximale Leistung 0,5-2,0 kW, vorteilhafterweise 1,0-1,6 kW beträgt.

14. Schneemobil nach Anspruch 12 oder 13, **dadurch gekennzeichnet, dass** die Steuerung (30) und der Elektromotor (2) eingerichtet sind, um als Generator zu fungieren, um die Batterie (11) aufzuladen und die kinetische Energie des Schneemobils (100) bei der Fahrt bergab zu nutzen.

15. Schneemobil nach einem der Ansprüche 12 bis 14, **dadurch gekennzeichnet, dass** die Steuerung (30) im Batterieraum (32) oder in einer anderen zum Rahmen (10) gehörenden Gehäusestruktur (72) angeordnet ist und das Schneemobil (100) ferner Folgendes einschließt
- ein Wärmeübertragungselement (34), das durch eine Wand des Batterieraums (32) oder der Gehäusestruktur (72) verläuft, wobei das Wärmeübertragungselement (34) ein drittes Ende (36), das an der Steuerung (30) angebracht ist, um Wärme von der Steuerung (30) zur Außenseite des Batterieraums (32) zu übertragen, und ein viertes Ende (38) umfasst, sowie
- ein Kühlelement (40), das mit dem vierten Ende (38) des Wärmeübertragungselements (34) in einer äußeren Oberfläche der Gehäusestruktur (72) verbunden ist, vorteilhafterweise in einer Oberfläche, die eine in der Gehäusestruktur (72) ausgebildete Entlüftung (52) für die Raupenantriebseinheit (14) begrenzt.

## Revendications

1. Trottinette à neige (100), comprenant
- un châssis (10) doté d'une première extrémité (23) et d'une deuxième extrémité (24), le châssis (10) formant le support de l'utilisateur (102),
- une colonne de direction (21) reliée à la première extrémité (23) du châssis (10) de manière articulée pour diriger la trottinette à neige (100),
- un patin de direction (8) relié à l'extrémité inférieure (28) de la colonne de direction (21) pour soutenir la trottinette à neige (100) sur la surface d'un substrat (104),
- un système d'entraînement à chenille (14) raccordé à la deuxième extrémité (24) du châssis (10) pour soutenir la trottinette à neige (100) sur la neige (104) et pour transmettre la traction à la surface du substrat (104), dans lequel le système d'entraînement à chenille (14) est composé d'un train de chenilles (7), d'une chenille (4) prenant la forme d'une boucle, d'une roue folle (3) et d'un barbotin (1),
- un moteur électrique (2) pour entraîner le système d'entraînement à chenille (14), le barbotin (1) recevant sa force motrice du moteur électrique (2), et
- une batterie (11) afin de stocker l'électricité pour le moteur électrique (2),
dans laquelle le châssis (10) comprend un espace pour la batterie (32) formé dans le châssis (10) pour la batterie (11), ledit espace pour la batterie (32) étant formé en lien avec la première extrémité (23) du châssis (10) devant le système d'entraînement à chenille (14) dans la direction de déplacement de la trottinette à neige (100) de façon à diriger le poids de la batterie (11) sur le patin de direction (8) afin d'améliorer la manœuvrabilité, **caractérisée en ce que**
- la trottinette à neige (100) ne dispose que d'un seul patin de direction (8),
- le support est une plate-forme à conducteur debout (25),
- le moteur électrique (2) se trouve dans la boucle de la chenille (4), et
- la trottinette à neige (100) est adaptée pour une conduite debout.

2. Trottinette à neige conformément à la revendication 1, **caractérisée en ce que** le système d'entraînement à chenille (14) comprend
- le train de chenilles (7) pour soutenir le système d'entraînement à chenille (14) sur le châssis (10) de la trottinette à neige (100), le train de chenilles (7) comprenant une extrémité avant (44) et une extrémité arrière (46),
- le barbotin (1) disposé dans l'extrémité avant (44) ou l'extrémité arrière (46) du train de chenilles (7),
- la roue folle (3) disposée au niveau de l'extrémité opposée du train de chenilles (7) par rapport au barbotin (1),
- la chenille (4) disposée dans la boucle autour du train de chenilles (7) et soutenue par le barbotin (1) et la roue folle (3), et
- des moyens de soutien (48) disposés sur une surface inférieure du train de chenilles (7) pour soutenir la chenille (4) entre le barbotin (1) et la roue folle (3).

3. Trottinette à neige conformément à la revendication 2, **caractérisée en ce que**, dans le système d'entraînement à chenille (14), l'angle de couverture du barbotin (1) et de la roue folle (3) par rapport à la chenille (4) est compris entre 170 et 180°.

4. Trottinette à neige conformément à l'une quelconque des revendications 1 à 3, **caractérisée en ce que** la hauteur du système d'entraînement à chenille (14) est comprise entre 20 et 40 %, avantageusement entre 30 et 38 %, de la longueur du système d'entraînement à chenille (14).

5. Trottinette à neige conformément à l'une quelconque des revendications 1 à 4, **caractérisée en ce que** la plate-forme à conducteur debout (25) est continue et même d'une longueur de 95 à 100 % de la longueur du châssis (10).

6. Trottinette à neige conformément à l'une quelconque des revendications 2 à 5, **caractérisée en ce que** la trottinette à neige (100) comprend également une chaîne (18) ou une courroie pour transmettre la puissance du moteur électrique (2) au barbotin (1).

7. Trottinette à neige conformément à l'une quelconque des revendications 2 à 6, **caractérisée en ce que** le train de chenilles (7) est relié au châssis (10) de manière articulée au moyen d'un axe transversal (13a) afin d'améliorer l'adaptabilité du système d'entraînement à chenille (14) au terrain.

8. Trottinette à neige conformément à l'une quelconque des revendications 1 à 7, **caractérisée en ce que** la colonne de direction (21) comprend une extrémité supérieure (26) et une extrémité inférieure (28), dans laquelle le patin de direction (8) est relié à l'extrémité inférieure (28) de manière articulée, et un guidon (9) est relié à l'extrémité supérieure (26) pour diriger la trottinette à neige (100).

9. Trottinette à neige conformément à l'une quelconque des revendications 1 à 8, **caractérisée en ce que** l'espace pour la batterie (32) se trouve dans le châssis (10), en position d'utilisation de la trottinette à neige (100) sous la plate-forme à conducteur debout (25).

10. Trottinette à neige conformément à l'une quelconque des revendications 1 à 9, **caractérisée en ce que** la hauteur du châssis (10) de la surface du substrat (104) jusqu'à la plate-forme à conducteur debout (25) est comprise entre 200 et 400 mm, avantageusement entre 270 et 330 mm.

11. Trottinette à neige conformément à l'une quelconque des revendications 2 à 10, **caractérisée en ce que** les moyens de soutien (48) comprennent
- plusieurs patins glissants (74) disposés à la suite sur la surface intérieure de la boucle de la chenille (4) dans le sens longitudinal de la chenille (4) des deux côtés de la roue folle (3), et
- des supports de guidage glissants (20) reliés à la surface inférieure du train de chenilles (7), lesdits supports de guidage glissants (20) étant adaptés pour glisser sur les patins glissants (74) de la chenille (4), soutenant ainsi la chenille (4) entre le barbotin (1) et la roue folle (3).

12. Trottinette à neige conformément à l'une quelconque des revendications 1 à 11, **caractérisée en ce que** la trottinette à neige (100) comprend également un dispositif de commande (30) pour contrôler l'utilisation du moteur électrique (2), et **en ce que** le dispositif de commande (30), la batterie (11) et le moteur électrique (2) sont adaptés pour fonctionner à une tension de 24 à 72 V, avantageusement de 48 V.

13. Trottinette à neige conformément à l'une quelconque des revendications 1 à 12, **caractérisée en ce que** le moteur électrique (2) est un moteur à courant continu sans balais, dont la puissance maximale de sortie est comprise entre 0,5 et 2,0 kW, avantageusement entre 1,0 et 1,6 kW.

14. Trottinette à neige conformément à la revendication 12 ou 13, **caractérisée en ce que** le dispositif de commande (30) et le moteur électrique (2) sont adaptés pour fonctionner comme un générateur afin de charger la batterie (11) et utiliser l'énergie cinétique de la trottinette à neige (100) en descente.

15. Trottinette à neige conformément à l'une quelconque des revendications 12 à 14, **caractérisée en ce que** le dispositif de commande (30) est disposé dans l'espace pour batterie (32) ou dans un autre logement (72) appartenant au châssis (10), et la trottinette à neige (100) comprend également
- un élément de transfert de chaleur (34) traversant une paroi de l'espace pour batterie (32) ou du logement (72), l'élément de transfert de chaleur (34) comprenant une troisième extrémité (36) reliée au dispositif de commande (30) pour transférer la chaleur émanant du dispositif de commande (30) à l'extérieur de l'espace pour batterie (32) et une quatrième extrémité (38), et
- un élément de refroidissement (40) relié à la quatrième extrémité (38) de l'élément de transfert de chaleur (34) dans une surface extérieure du logement (72), avantageusement dans une surface délimitant une ouverture (52) formée dans le logement (72) pour le système d'entraînement à chenille (14).
